**Europäisches Patentamt**

**European Patent Office**

**Office européen des brevets**

(19)

(11) Veröffentlichungsnummer: **0 167 939**
**B1**

(12) # EUROPÄISCHE PATENTSCHRIFT

(45) Veröffentlichungstag der Patentschrift:
**07.12.88**

(21) Anmeldenummer: **85108011.9**

(22) Anmeldetag: **28.06.85**

(51) Int. Cl.⁴: **B 30 B 9/16, A 23 N 1/00**

(54) Vorrichtung zur Behandlung eines Gutes zur Trennung einer flüssigen Phase von einer festen Phase.

(30) Priorität: **04.07.84 CH 3233/84**

(43) Veröffentlichungstag der Anmeldung:
**15.01.86 Patentblatt 86/3**

(45) Bekanntmachung des Hinweises auf die Patenterteilung:
**07.12.88 Patentblatt 88/49**

(84) Benannte Vertragsstaaten:
**AT BE DE FR GB IT NL SE**

(56) Entgegenhaltungen:
**CH-A- 122 422**
**DD-A- 150 427**
**FR-A- 2 147 449**

(73) Patentinhaber: **Pharos Inventions AG, Dorfstrasse 19,
CH-6300 Zug (CH)**

(72) Erfinder: **Wiederkehr, Hans, Dr., Ifangstrasse 107,
CH-8153 Rümlang (CH)**

(74) Vertreter: **EGLI-EUROPEAN PATENT ATTORNEYS,
Horneggstrasse 4, CH-8008 Zürich (CH)**

## Beschreibung

Die Erfindung betrifft eine Vorrichtung zur Behandlung eines Gutes zwecks Trennung einer flüssigen Phase von einer festen Phase, bei welcher in einer Mehrstufeneinheit zwei oder mehr Schneckenpressen getrennt in Stufen angeordnet sind, die mit von einander unabhängigen, regelbaren und/oder reversierbaren Antrieben ausgerüstet sind, und bei denen mit Ausnahme bei der letzten Schneckenpresse der Pressgutausgang mit dem Pressguteingang der nachfolgenden Schneckenpresse durch einen Überführkanal verbunden ist, in welchem eine Fördervorrichtung für den Weitertransport des aus dem Pressgutausgang austretenden Pressgutes in den nachfolgenden Pressguteingang eingebaut ist.

Es ist bekannt, ein Gut, insbesondere ein pflanzliches Gut, so aufzubereiten, dass möglichst wenig der im Gut enthaltenen Nährstoffe verlorengehen. Im Hinblick auf eine schonende Behandlung sind thermische oder chemische Verfahren auszuschliessen, so dass hierfür lediglich ein mechanisches Verfahren anwendbar ist, bei welchem das Aufschliessen der Zellen durch Pressen, verbunden mit einer quetschenden, schabenden oder reibenden Behandlung, erreicht wird. Ist der Zeitraum zwischen der Ernte eines Gutes und dessen Verarbeitung klein, kann dieses Verfahren als optimal angesehen werden, da hierbei auch das Auftreten von Schimmel durch eine keimtötende Behandlung vermieden werden kann. Mit der Weiterverarbeitung der flüssigen Phase gelingt es, das in derselben enthaltene Protein zu gewinnen, welches in vielfältiger Weise sowohl für die menschliche als auch für die tierische Nahrung Verwendung finden kann. Der festen Phase wird der noch vorhandene Feuchtigkeitsrest weitgehend entzogen und gleichzeitig eine Konservierung durchgeführt. Da das so erhaltenen Produkt noch einen hohen Proteingehalt aufweist, ist es als Eiweissträger in der tierischen Ernährung bestens anwendbar.

Bei einem bekannten Verfahren (EP 108 762) wird die Gewinnung der festen und der flüssigen Phase durch eine Pressbehandlung eines pflanzlichen Gutes erreicht. Hierzu wird vor allem die Verwendung von Schneckenpressen vorgeschlagen. Zweck dieser Aufbereitung ist es, durch eine intensive, quetschende, schabende und reibende Behandlung des pflanzlichen Gutes die Schutzschichten der pflanzlichen Zellen zu öffnen bzw. zu zerstören, wodurch die Zerlegung in die aus Zellsaft bestehende flüssige Phase und in die feste, im wesentlichen aus Pflanzenfasern bestehende feste Phase erreicht wird. Mit diesem Verfahren kann pflanzliches Gut verschiedener Herkunft bearbeitet werden, doch ist der Trennvorgang, da er im wesentlichen in einer einzigen Pressbehandlung und damit in einer einzigen Pressvorrichtung erfolgt, nicht optimal auf das unterschiedliche Gut einstellbar.

Eine bekannte Pressvorrichtung (EP 108 763) ist als Doppel-Schneckenpresse ausgebildet. Diese setzt sich aus mehreren Gehäuseelementen zusammen, die gleichzeitig Behandlungabschnitte definieren, in denen das pflanzliche Gut nacheinander behandelt wird, bis an der Austrittseite die feste Phase als Trockensubstanz, meistens in Form von Pellets ausgetragen wird. Die entstehende flüssige Phase wird abgepumpt oder nach Übergang in eine dampfförmige Phase abgesaugt. Durch die Anordnung der Schneckenpresse in aufeinanderfolgende, aneinandergereihte Abschnitte kann zwar die entsprechende Schneckenpartie der Veränderung des Pressgutes angepasst werden, jedoch ist diese Anpassung deshalb nicht optimal, da einerseits die Drehzahl für alle Bearbeitungsabschnitte dieselbe ist und andererseits eine Kontrolle und eine sich darauf ergebende Beeinflussung des Pressgutes wegen den unmittelbar aufeinanderfolgenden Behandlungsabschnitten praktisch nicht möglich ist.

Aus der DD-A-150 427 ist ein Verfahren zur Gewinnung von löslichen Stoffen aus einem mindestens teilweise zerstörten Zellgewebe bekannt, bei dem in einem halb chemischen, halb mechanischen Verfahren das Gut durch aufeinanderfolgendes Pressen und Extrahieren behandelt wird. Hierbei gelangt das Gut nacheinander in mehrere Pressen, zwischen denen jeweils eine Mischzone angeordnet ist, durch welche das Gut zusammen mit einem zugemischten, flüssigen Extraktionsmittel gefördert wird. Hierbei wird jedoch eine schonende Behandlung des Gutes nicht eingehalten.

Aus der FR-A-2 147 449 ist ein Verfahren zur Extraktion von Fruchtsäften bekannt, bei welchem Schneckenpressen eingesetzt werden. Da die Behandlung in verschiedenen Stufen entweder in einer einzigen Presse oder in mehreren Pressen mit zwei und drei Stufen erfolgt, ist der Pressvorgang nicht optimal dem jeweiligen Gut anpassbar.

Aus der CH-A-122 422 ist eine Schneckenpresse bekannt, bei der mehrere Pressen übereinander angeordnet sind, die über ein Vorgelege durch einen Antrieb angetrieben und an ihrer Ausgangsseite – mit Ausnahme der letzten Schneckenpresse – mit der Eingangsseite der nachfolgenden Schneckenpresse durch einen Schacht verbunden ist. Damit ist weder eine optimale Drehzahleinstellung je nach dem behandelten Gut an den einzelnen Schneckenpressen, noch im Hinblick auf den Schacht eine andere Anordnung als die übereinander liegende Anordnung möglich.

Die Erfindung bezieht sich ebenfalls auf die Behandlung eines Gutes, insbesondere eines pflanzlichen Gutes, zur Trennung der beiden Phasen, insbesondere im Hinblick auf die Gewinnung von Protein und eines ebenfalls proteinhaltigen Feststoffproduktes, und betrifft nur einen Teil dieser Behandlung, d.h. die Aufbereitung des pflanzlichen Gutes zur Trennung in die flüssige und in die feste Phase. In diesem Rahmen ist es die Aufgabe der Erfindung, die Vorrichtung der eingangs beschriebenen Art so weiter auszugestalten, dass die Behandlung dem jeweils aufzuarbeitenden Gut angepasst und damit eine optimale und gleichzeitig schonende Aufbereitung des Gutes erreicht wird.

Diese Aufgabe wird gemäss der Erfindung dadurch gelöst, dass die Schneckenpressen Zweiwellenpressen sind und der Überführkanal zwischen zwei Schneckenpressen als Kanal mit zwei zueinander in einem Winkel angeordneten Rohrschenkel ausgebildet ist, wobei in dem austrittseitigen Rohrschenkel des Überführkanals eine Stauvorrichtung mit einstellbaren Stauklappen und in dem anderen, eintrittseitigen Rohrschenkel eine Förderschnecke als Fördereinrichtung eingebaut ist.

Die Erfindung ist in der beiliegenden Zeichnung in einem Ausführungsbeispiel dargestellt und nachfolgend beschrieben. Es zeigen:

Fig. 1 ein Blockdiagramm einer Vorrichtung zur Gewinnung einer flüssigen und einer festen Phase durch Behandlung eines Gutes, insbesondere von pflanzlichem Gut.

Fig. 2 eine schematische Darstellung einer Mehrstufeneinheit der Vorrichtung nach Fig. 1 und

Fig. 3 eine schematische, räumliche Darstellung einer Schneckenpresse als Teil einer Mehrstufeneinheit nach Fig. 2 mit je einem, auseinandergezogen dargestellten Überführkanal am Pressguteingang und am Pressgutausgang.

In der nachfolgenden Darstellung wird die Behandlung eines pflanzlichen Gutes beschrieben.

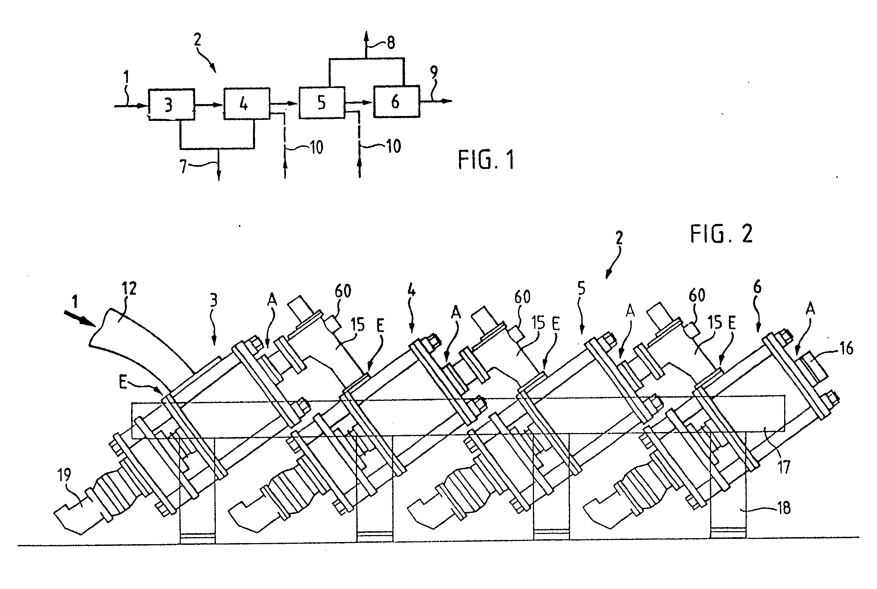

Gemäss Fig. 1 wird pflanzliches Gut 1, das zweckmässig frisch geerntet wird, in eine Mehrstufeneinheit 2 eingeführt, die gemäss Fig. 1 vier Stufen 3, 4, 5, 6 aufweist. Die Mehrstufeneinheit 2 kann jedoch auch je nach dem verarbeiteten pflanzlichen Gut aus zwei, drei oder auch mehr als vier Stufen zusammengesetzt sein. Es werden so viele Stufen eingesetzt, als für eine einwandfreie Trennung des pflanzlichen Gutes 1 in eine flüssige und in eine feste Phase erforderlich ist. Die Stufen 3 – 6 sind dabei voneinander unabhängige Pressräume, in denen das pflanzliche Gut 1 aufbereitet wird. Die Aufbereitung besteht im wesentlichen aus einer Pressoperation, die mit einem Quetschen , Schaben oder Reiben des Gutes verbunden sein kann. Durch diese Operation erfolgt die Zerlegung in Zellsaft und in eine faserreiche feste Phase. Diese Trennoperation findet vor allem in der ersten und zweiten Stufe 3, 4 statt, weshalb bei diesen beiden Stufen ein Ablauf für den Zellsaft 7 dargestellt ist. In den beiden darauffolgenden Stufen 5, 6 ist die Ableitung des Zellsaftes weggelassen, da in diesen Stufen wegen der durch die Aufbereitung entstehenden Wärme die Restfeuchtigkeit weitgehend verdampft und als Dampf 8 durch entsprechende Leitungen aus den Stufen 5, 6 abgesaugt wird. Aus der letzten Stufe 6 tritt das Pressgut als Trockensubstanz 9 aus. Hierbei handelt es sich um ein konserviertes Festprodukt, das noch einen hohen Proteingehalt aufweist und sich damit für die Tierfütterung eignet. Das Festprodukt kann in verschiedener Form, z.B. als Pellets, zur Verfügung gestellt werden.

In Fig. 1 sind bei den Stufen 4, 5 durch gestrichelte Linien die Einführung von Medien 10 verschiedener Art dargestellt, z.B. die Zufuhr von Luft, Dampf, Heizwärme oder Flüssigkeit. Die Anordnung in unabhängigen Stufen erlaubt es, zwischen jeder Stufe solche zusätzlichen Behandlungen des Pressgutes durchzuführen. Es können die in Fig. 1 dargestellten Möglichkeiten auch variiert werden. Es können weitere Stufen mit einer Zellsaftableitung versehen sein, aber auch die Dampfableitung kann auf weitere Stufen ausgedehnt werden, ebenso die Zufuhr von Medien 10. Durch die Mehrstufeneinheit kann eine sehr weitgehende Anpassung für eine optimale Aufbereitung des jeweiligen pflanzlichen Gutes 1 erreicht werden.

In Fig. 1 ist die Vorbehandlung des in der ersten Stufe eingeführten pflanzlichen Gutes 1 und die weitere Verarbeitung des Zellsaftes 7 nicht dargestellt, da dies für die vorliegende Erfindung nicht wesentlich ist. Diese Vorbehandlung umfasst das Waschen, Trocknen, das Aussortieren von Fremdkörpern und das Zerkleinern des pflanzlichen Gutes 1. Die Weiterbehandlung des Zellsaftes 7 umfasst das Pasteurisieren des Proteins und das Trennen desselben von der Restflüssigkeit.

Die in Fig. 2 dargestellte Mehrstufeneinheit 2 umfasst vier Stufen 3 – 6, deren Pressräume als Schneckenpressen ausgebildet sind, z.B. mit Schnecken variabler Steigung, für Gleichlauf oder Gegenlauf der Schnecken. Grundsätzlich könnte die Trennung der flüssigen und festen Phase auch durch andere Geräte durchgeführt werden, jedoch eignet sich nach den bisherigen Erfahrungen die Schneckenpresse besonders gut. Aus diesem Grunde ist die Vorrichtung für die Behandlung des pflanzlichen Gutes unter Verwendung von Schneckenpressen beschrieben.

Nach Fig. 2 werden die einzelnen Stufen 3–6 mit ihren Schneckenpressen in geneigter Lage angeordnet, wobei das pflanzliche Gut 1, gegebenenfalls nach seiner Vorbehandlung, durch eine Leitung 12 der Eintrittseite E der Schneckenpresse der ersten Stufe 3 zugeführt wird. Auf der Austrittseite A wird das austretende Pressgut durch einen Überführkanal 15 auf die Eintrittseite der nachfolgenden Stufe 4 geleitet. Jede der Stufen 3, 4, 5 ist durch einen solchen Überführkanal 15 mit der Eintrittseite E der nachfolgenden Stufe verbunden; einzig auf der Austrittseite A der Stufe 6 ist eine Pressplatte 16 angeordnet, die das getrocknete und konservierte Festprodukt in die gewünschte Form bringt.

Die vier Stufen 3 – 6 sind in einem Rahmen befestigt, der durch zwei, schematisch dargestellte Längsträger 17 gebildet ist, die auf Stützen 18 abgestützt sind. Die Schneckenpresse jeder Stufe ist durch einen hydraulischen Antrieb angetrieben, von dem in Fig. 2 der Hydromotor 19 dargestellt ist. Wesentlich ist, dass jeder Hydromotor 19 Teil eines unabhängigen Hydrogetriebes ist, so dass die Drehzahl jeder Schneckenpresse für sich einstellbar und regelbar ist. Anstelle von Hydro-Antrieben könnten auch elektrische oder mechanische Regelantriebe verwendet werden.

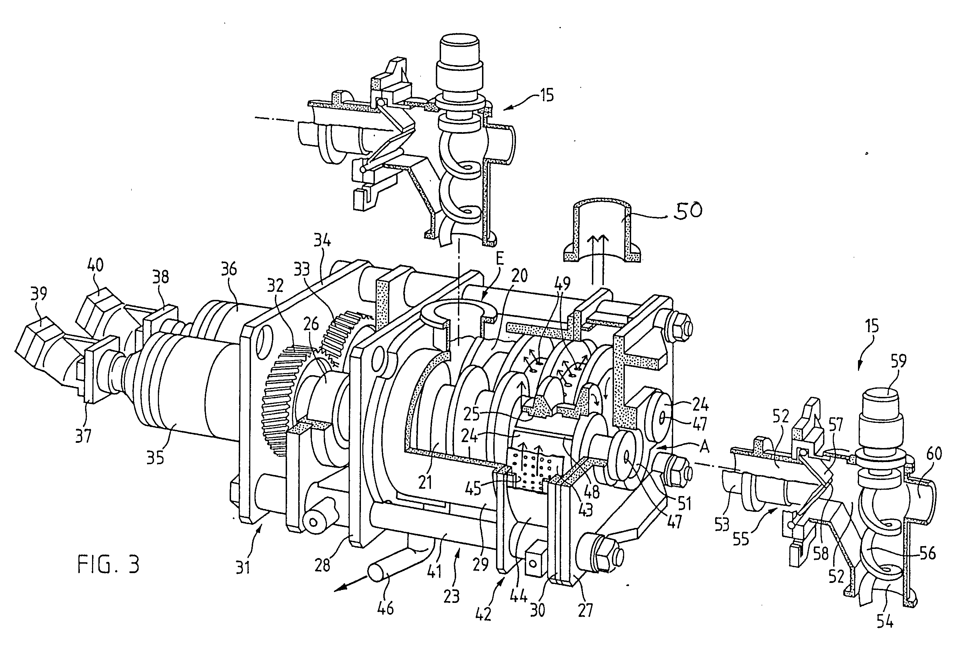

In Fig. 3 ist eine der als Schneckenpressen ausgebildeten Stufen 3 – 6 mit teilweise weggebrochenem Gehäuse und mit je einem Überführkanal 15 auf der Eintrittseite E und auf der Austrittseite A dargestellt. Für die erste Stufe 3 ist jedoch der eintrittseitige Überführkanal 15 durch die Leitung 12 zur Einführung des vorbehandelten pflanzlichen Gutes und für die letzte Stufe 6 der austrittseitige Überführkanal 15 durch die Pressspaltte 16 ersetzt. Der Aufbau der Stufen 3 – 6 ist jedoch in den meisten Teilen ähnlich.

Die Schneckenpresse setzt sich aus zwei Schnecken 20, 21 und einem Schneckengehäuse zusammen. Jede Schnecke 20, 21 weist eine Schneckenwelle 24 auf, auf der Schneckensegmente 25 aufgereiht und festgespannt sind. Die Verwendung von einzelnen Schneckensegmenten 25 erlaubt die Zusammenstellung von Schnecken verschiedener Steigung und den Ersatz einzelner Segmente, ohne die gesamte Schnecke ersetzen zu müssen. Die Schneckenwellen 24 sind beidseits in der Wand des Schneckengehäuses 23 gelagert, z.B. mittels Gleit- oder Wälzlagern 26.

Das Schneckengehäuse 23 weist zwei Endflanschen 27, 28 mit einem dazwischenliegenden hohlzylindrischen Gehäusemantel 29 auf, wobei der austrittseitige Endflansch 27 durch eine verschleissfeste Pressplatte 30 abgedeckt ist.

Am eintrittseitigen Endflansch 28 schliesst ein Lager- und Getriebegehäuse 31 an, in dem die Lager 26 und ein Zahnradpaar 32, 33 angeordnet sind. Das Lager- und Getriebegehäuse 31 ist durch einen Aussenflansch 34 geschlossen, an welchem zwei Kupplungsgehäuse 35, 36 befestigt sind. Die Kupplungsgehäuse 35, 36 weisen einen Flansch 37, 38 auf, an dem je ein Hydromotor 39, 40 befestigt ist. Die Wellen der Hydromotoren 39, 40 sind durch im Kupplungsgehäuse 35, 36 untergebrachte Kupplungen mit den Schneckenwellen 24 verbunden, die sich durch das Schneckengehäuse 23 und das Lager- und Getriebegehäuse 31 erstrecken.

Die Hydromotoren 39, 40 sind Teil eines Hydro-Regelgetriebes, dessen Regelpumpe den Ölstrom für die, zweckmässig parallel geschalteten Hydromotoren 39, 40 liefert. Da die Wellen der Hydromotoren 39, 40 durch das Zahnradpaar 32, 33 gekuppelt sind, liefert jeder dieser Hydromotoren die Hälfte der für die Schneckenpresse benötigten Antriebsleistung. Der Leistungsbedarf der einzelnen Stufen ist unterschiedlich, wobei die erste Stufe 3 gewöhnlich weniger Leistung benötigt, so dass in diesem Fall der eine der Hydromotoren 39, 40 weggelassen werden kann. Die Leistungsverzweigung erfolgt dann im Zahnradpaar 32, 33.

Das Schneckengehäuse 23 und das Lager- und Getriebegehäuse 31 sind durch Spannbolzen 41 zusammengehalten und bilden damit ein geschlossenes Gehäuse.

Der Zellsaft fällt vor allem in den ersten Stufen, d.h. in der ersten und zweiten Stufe 3, 4 an. Aus diesem Grund ist ein Teil des Gehäusemantels 29 durch ein Zwischengehäuse 42 ersetzt, das als Gehäusewandung einen Siebmantel 43 aufweist, der durch einen, durch eine Wandung 44 abgeschlossenen Ringkanal 45 umgeben ist. Der aus den Zellen des pflanzlichen Gutes austretende Zellsaft sammelt sich auf kürzestem Weg im Ringkanal 45 und wird durch eine Ableitung 46 der weiteren Bearbeitung zugeleitet.

Durch Pfeile im Innern des Schneckengehäuses 23 ist der Durchlauf eines Mediums, z.B. Luft oder Dampf, dargestellt, das durch Bohrungen 47 in den Schneckenwellen 24 eingeführt wird und über Kanäle 48 und Radialbohrungen 49 zwischen oder in den Schneckensegmenten 25 in das geschlossene Schneckengehäuse 23 austritt. Im Scheitel des Schneckengehäuses 23 befindet sich ein Stutzen (nicht dargestellt), an den eine Leitung 50 anschliesst, durch die Luft und Zellsaft abgeleitet wird. Der Stutzen für die Leitung 50 befindet sich im Scheitelbereich am austrittseitigen Ende der Schneckenpresse. Auf der Austrittseite tritt das Pressgut durch eine Austrittsöffnung in den Überführkanal 15. Der austrittseitige Überführkanal 15 weist einen im wesentlichen winkelförmigen Kanal 52 auf, in dessen eintrittseitigen Rohrschenkel eine Stauvorrichtung 55 und in dessen austrittseitigen Rohrschenkel 54 eine Fördervorrichtung 56 für den Transport des Pressgutes angeordnet sind. Die Stauvorrichtung 55 weist zwei schwenkbare Stauklappen 57 auf, die durch einen Schwenkantrieb (nicht dargestellt), z.B. einen Hydrozylinder, in einer bestimmten Schwenklage gehalten werden. Durch die Stauklappen 57 kann ein variabler Durchtrittspalt 58 eingestellt werden, durch den der Pressdruck in der Schneckenpresse geregelt werden kann. Die Fördervorrichtung 56, z.B. eine Förderschnecke, wird durch einen motorischen Antrieb 59, z.B. einen Hydromotor, angetrieben. Die Anordnung der Stauvorrichtung 55 im Überführkanal 15 ergibt den Vorteil, dass die Wirkung desselben, z.B. durch Messung der Temperatur des Pressgutes, kontrolliert werden kann. Hierzu ist im Kanal 52 eine Öffnung 60 vorgesehen, durch die das Gut überwacht werden kann. Durch die Öffnung 60 können zudem Medien, z.B. Luft, Dampf oder auch Flüssigkeiten, eingebracht werden.

Der in Fig. 3 dargestellte eintrittseitige Überführkanal 15 ist genau gleich wie der austrittseitige Überführkanal aufgebaut, weshalb er nicht beschrieben wird. Die Überführkanäle 15 dienen, wie bereits erwähnt wurde, der Kontrolle und der Einführung von Medien, aber auch für die Gewährleistung eines kontinuierlichen Durchflusses des Pressgutes durch die Vorrichtung. Hierfür sind die motorischen Antriebe der Fördervorrichtung 56 ebenfalls in ihrer Drehzahl regelbar.

Eine zweckmässige Anordnung der Schneckenpressen in Reihenanordnung der einzelnen Stufen 3 – 6 zeigt Fig. 2, jedoch ist auch eine andere Anordnung möglich. In jedem Fall ist diese Anordnung platzsparend und kann dem vorhandenen Platz angepasst werden. Dies ist eine wesentliche Voraussetzung, damit die ganze Vorrichtung, einschliesslich der Vorbehandlungs- und Nachbehandlungsteile auf der Plattform eines Fahrzeuges aufgebaut werden kann. Hierbei ist es zweckmässig, die Vorrichtung selbst auf einer Plattform aufzubauen, mit Hilfe welcher sie auf einem Fahrzeug gelagert werden kann.

Da das Pressgut in den letzten Pressstufen, d.h. in der dritten und vierten Stufe 5, 6, nur noch wenig Feuchtigkeit enthält und zudem das Pressgut eine verhältnismässig hohe Temperatur, z.B. 60–80° C, aufweist, tritt diese Feuchtigkeit in Form von Dampf aus und wird durch die Leitung 50 abgesaugt. Hierbei kann dann auf das Zwischengehäuse 42 verzichtet werden und der Gehäusemantel 29 erstreckt sich dann bis zur Pressplatte 30. Mit dieser Einrichtung ist es möglich, eine einzelne Pressstufe unter Vakuum zu halten.

Anstelle von pflanzlichem Gut können auch Müll, Klärschlamm, Holzabfälle, z.B. Rinde, Sägemehl o.dgl., Stroh und Torf in der beschriebenen Vorrichtung verarbeitet werden. Aber auch das Herstellen von Granulat aus Autoreifenstücken, z.B. zur Verwendung als Dünger, oder aus Glasstücken mit Korngrössen unter 1 mm ist möglich. Die Vorrichtung ist dank ihrem Aufbau in getrennten Stufen derart weitgehend anpassbar,d.h. bezüglich Drehzahl, Drehrichtung, Steigung und Form der Schnecken und bezüglich der Behandlung des Gutes mit Wärme, Kälte, Dampf, Flüssigkeiten und Gasen, dass so unterschiedliches Gut, wie vorstehend erwähnt ist, behandelt werden kann.

## Patentansprüche

1. Vorrichtung zur Behandlung eines Gutes zwecks Trennung einer flüssigen Phase von einer festen Phase, bei welcher in einer Mehrstufeneinheit zwei oder mehr Schneckenpressen getrennt in Stufen (3, 4, 5, 6) angeordnet sind, die mit von einander unabhängigen, regelbaren und/ oder reversierbaren Antrieben (39, 40) ausgerüstet sind und bei denen mit Ausnahme bei der letzten Schneckenpresse der Pressgutausgang (A) mit dem Pressguteingang (E) der nachfolgenden Schneckenpresse durch einen Überführkanal (15) verbunden ist, in welchem eine Fördervorrichtung (56) für den Weitertransport des aus dem Pressgutausgang austretenden Pressgutes in den nachfolgenden Pressguteingang eingebaut ist, dadurch gekennzeichnet, dass die Schneckenpressen (3–6) Zweiwellenpresen sind und der Überführkanal (15) zwischen zwei Schneckenpressen als Kanal (52) mit zwei zueinander in einem Winkel angeordneten Rohrschenkeln (53, 54) ausgebildet ist, wobei in dem austrittseitigen Rohrschenkel (53) des Überführkanals (15) eine Stauvorrichtung (15) mit einstellbaren Stauklappen (57) und in dem anderen, eintrittseitigen Rohrschenkel (54) eine Förderschnecke (56) als Fördereinrichtung eingebaut sind.

2. Vorrichtung nach Anspruch 1, dadurch gekennzeichnet, dass die Drehzahl der Förderschnecke (56) in dem eintrittseitigen Rohrschenkel (54) des Überführkanals (15) einstellbar ist.

3. Vorrichtung nach Anspruch 1, dadurch gekennzeichnet, dass die Zweiwellenpressen aus Schneckensegmenten (25) zusammengesetzte Schnecken aufweisen, die auf einer hohlen, an beiden Enden in einem Scheckengehäuse (23) gelagerten, hohlen Schneckenwelle (24) fest aufgeschoben sind.

4. Vorrichtung nach Anspruch 3, dadurch gekennzeichnet, dass die Schneckengehäuse (23) einen Gehäusemantel (29) aufweisen, dessen austrittseitiges Ende glattwandig oder als Siebmantel (43) ausgebildet ist, wobei der Siebmantel durch einen Ringkanal (45) mit mindestens einer Ableitung (46) versehen ist.

5. Vorrichtung nach Anspruch 3, dadurch gekennzeichnet, dass in den Schneckenwellen (24) und in den Schneckensegmenten (25) Kanäle und Bohrungen (48, 49) angeordnet sind, die ausgangsseitig durch ein Medium, z.B. Dampf oder eine Flüssigkeit, beaufschlagbar sind.

6. Vorrichtung, nach Anspruch 4, dadurch gekennzeichnet, dass auf dem austrittseitigen Ende des Gehäusemantels (29) im Scheitelbereich eine Öffnung mit einer Leitung (50) angeordnet ist.

## Claims

Device for treating a material for the purpose of separating a liquid phase from a solid phase in which, in a multistage unit, two or more screw presses are arranged separated into stages (3, 4, 5, 6) which are provided with independent controllable and/or reversible drives (39, 40) and in which, with the exception of the last screw press, the press material outlet (A) is connected with the press material inlet (E) of the subsequent screw press via a transfer channel (15) in which a feed device (56) is built in for the further transport of the material emerging from the pressed material outlet into the subsequent pressed material inlet, characterised in that the screw presses (3 – 6) are twin roll presses and the transfer channel (15) between two screw presses is constructed as a channel (52) with two tube sections (53, 54) arranged at an angle to one another, wherein, in the outlet side tube section (53) of the transfer channel (15), there is built in a damming device (15) with adjustable dam flaps (57) and in the other entry side tube section (54) a feed screw (56) as feeding device.

2. Device according to Claim 1, characterised in that the rotational speed of the feed screw (56) in the inlet side tube section (54) of the transfer channel (15) is adjustable.

3. Device according to Claim 1, characterised in that the two roll press has screws composed of screw segments (25) which are fixedly slid onto a hollow screw shaft (24) mounted on both ends in a screw housing (23).

4. Device according to Claim 3, characterised in that the screw housing (23) has a housing cover (29) the outlet side end of which is constructed with smooth walls or as a sieve cover (43) wherein the sieve cover is provided by an annular channel (45) with at least one outlet (46).

5. Device according to Claim 1, characterised in that channels and bores (48, 49) are arranged in the screw slots (24) and in the screw segments (25) which can be fed from outside with a medium, e.g. steam or a liquid.

6. Device according to Claim 4, characterised in that on the outlet side end of the housing cover (29) in the ridge region is arranged an opening with a lead (50).

### Revendications

1. Dispositif pour le traitement d'un produit en vue de séparer la phase liquide de la phase solide, dans lequel une unité à plusieurs étages contient deux ou plus de deux boudineuses à vis qui sont montées séparément à des étages (3, 4, 5, 6) qui sont équipées de dispositifs d'entraînement (39, 40) indépendants les uns des autres, réglables et/ou réversibles et dans lesquelles, sauf dans la dernière boudineuse, la sortie (A) du produit comprimé est reliée à l'entrée (E) de la boudineuse suivante par un conduit de transfert (15) dans lequel est monté un dispositif de transport (56) assurant le transport du produit comprimé provenant de la sortie de produit comprimé jusque dans l'entrée suivante de produit comprimé, caractérisé en ce que les boudineuses (3 à 6) sont des presses à double corps et que le conduit de transfert (15) intercalé entre deux boudineuses est un conduit (52) à deux branches tubulaires (53, 54) faisant un certain angle l'une avec l'autre, la branche tubulaire (53) du conduit de transfert (15) qui est située du côté de la sortie contenant un dispositif de retenue (15) comportant des vannes de retenue réglables (57) et l'autre branche tubulaire (54) qui est située du côté de l'entrée, comportant un dispositif de transport constitué par une transporteuse à vis sans fin (56).

2. Dispositif selon la revendication 1, caractérisé en ce que la vitesse de rotation de la transporteuse à vis sans fin(56) montée dans la branche tubulaire (54) du canal de transfert (15) située du côté de l'entrée est réglable.

3. Dispositif selon la revendication 1, caractérisé en ce que les presses à double corps comportent des vis sans fin composées de segments (25) de vis sans fin qui sont poussés de manière à être bloqués sur un arbre à vis sans fin creux (24) monté sur palier à ses deux extrémités dans un carter de vis sans fin (23) creux.

4. Dispositif selon la revendication 1, caractériséen ce que les carters à vis sans fin (23) comportent une enveloppe (29) dont l'extrémité située du côté de la sortie a des parois lisses ou constitue un manchon perforé (43) qui est associé à un conduit annulaire (45) comportant au moins un dispositif d'évacuation (46).

5. Dispositif selon la revendication 1, caractérisé en ce que les arbres (24) à vis sans fin et les segments (25) de vis sans fin comportent des conduits et des alésages (48, 49) qui, du côté de la sortie, peuvent être soumis à l'action d'un milieu, par exemple de vapeur ou d'un liquide.

6. Dispositif selon la revendication 4, caractérisé en ce que l'extrémité de l'enveloppe (29) du carter située du côté de la sortie comporte, dans sa partie supérieure, une ouverture associée à une canalisation (50).

FIG. 1

FIG. 2

EP 0 167 939 B1

FIG. 3